# EUROPÄISCHE PATENTSCHRIFT

(11) **EP 4 277 767 B1**
(45) Veröffentlichungstag und Bekanntmachung des Hinweises auf die Patenterteilung: **13.11.2024**
(21) Anmeldenummer: 21820511.0
(22) Anmeldetag: 25.11.2021
(51) Int. Cl.: B23Q 1/48, B23Q 3/155, B23Q 7/04, B25J 9/02, B25J 9/04

(54) **HANDHABUNGSANORDNUNG EINER WERKZEUGMASCHINE**
MANIPULATOR DEVICE FOR A MACHINE TOOL
DISPOSITIF DE MANIPULATION POUR MACHINE-OUTIL

(30) Priorität: 13.01.2021 DE 102021100556
(43) Veröffentlichungstag der Anmeldung: 22.11.2023
(73) Patentinhaber: P&L GmbH & Co. Kg, 29614 Soltau (DE)
(72) Erfinder: RÖDERS, Jürgen, 29614 Soltau (DE)
(74) Vertreter: Hoefer & Partner Patentanwälte mbB
(86) Internationale Anmeldenummer: PCT/EP2021/083003
(87) Internationale Veröffentlichungsnummer: WO 2022/152444

(56) Entgegenhaltungen:
- EP-A2- 1 481 759
- JP-A- H08 162 515
- JP-A- H09 193 054
- US-A1- 2005 196 263

## Beschreibung

Die Erfindung betrifft eine Handhabungsanordnung zum Handhaben von Werkzeugen und/oder Werkstücken einer Werkzeugmaschine sowie eine Werkzeugmaschinenanordnung.

Zur Automatisierung einer Beschickung von Werkzeugmaschinen mit Werkstücken und für einen Werkzeugwechsel werden Handhabungsanordnungen verwendet. Dies kann beispielsweise mittels 6-Achs-Robotern geschehen, welche jedoch neben hohen Investitionskosten auch hohe Wartungskosten aufweisen. Alternativ ist es bekannt, statt 6-Achs-Robotern einfachere Handhabungsanordnungen zu verwenden, welche vor der Werkzeugmaschine auf einer Schiene längs verfahren, um Werkstücke in die Werkzeugmaschine für eine Bearbeitung zu transportieren und aus dieser zu entnehmen. Diese Handhabungsanordnungen sind üblicherweise derart aufgebaut, dass ein Schlitten auf einer Bodenachse längs der Werkzeugmaschine verfahrbar ist. Auf dem Schlitten ist ein drehbarer Turm gelagert, an welchem ein horizontal ausfahrbarer Teleskoparm nach oben und nach unten gefahren werden kann. Auf diese Weise können mit vier gesteuerten Achsen in allen Richtungen beliebige Positionen angefahren werden. Dieser Aufbau hat sich zwar grundsätzlich bewährt, benötigt jedoch vor der Werkzeugmaschine relativ viel Platz. Weiterhin nachteilhaft ist es, dass sämtliche Komponenten der Handhabungsanordnung vor Ort bei einem Kunden einzeln installiert werden müssen. Dies führt zu relativ langen Installationszeiten. Ferner ist aus der US 2005/196263 A1 eine Handhabungsanordnung gemäß dem Oberbegriff des Anspruchs 1 bekannt.

Es ist Aufgabe der vorliegenden Erfindung, bei einfacher und kostengünstiger Herstellbarkeit eine Handhabungsanordnung bereitzustellen, welche vor einer Werkzeugmaschine sehr wenig Platz benötigt und bei einem Kunden schnell und einfach montiert werden kann, sowie eine Werkzeugmaschinenanordnung mit einer derartigen Handhabungsanordnung.

Diese Aufgabe wird durch eine Handhabungsanordnung mit den Merkmalen des Anspruchs 1 und einer Werkzeugmaschinenanordnung mit den Merkmalen des Anspruchs 15 gelöst. Die Unteransprüche zeigen bevorzugte Weiterbildungen der Erfindung.

Die erfindungsgemäße Handhabungsanordnung zum Handhaben von Werkzeugen und/oder Werkstücken mit den Merkmalen des Anspruchs 1 hat den Vorteil, dass die Handhabungsanordnung einen sehr kompakten und einfachen Aufbau aufweist. Dadurch kann die Handhabungsanordnung auf engstem Raum, beispielsweise vor Werkzeugmaschinen, zwischen einem Regalsystem und der Werkzeugmaschine, angeordnet werden. Dabei ist die erfindungsgemäße Handhabungsanordnung sehr kostengünstig und robust aufgebaut. Dies wird erfindungsgemäß dadurch erreicht, dass die Handhabungsanordnung eine horizontale Schienenanordnung und einen Turm aufweist, welcher auf der horizontalen Schienenanordnung in Richtung einer Horizontalachse verfahrbar ist. Ferner umfasst die Handhabungsanordnung eine vertikale Schienenanordnung, welche am Turm angeordnet ist. Ein Vertikalschlitten ist auf der vertikalen Schienenanordnung in Vertikalrichtung verfahrbar. Ferner ist ein einziger, einstückiger, starrer Arm ohne Gelenk oder Knickstelle vorgesehen, welcher am Vertikalschlitten angeordnet ist und um eine horizontale erste Schwenkachse am Vertikalschlitten schwenkbar ist. Der Arm ist vorzugsweise in Form eines linearen Stabes oder Balkens vorgesehen. Ein Manipulator, insbesondere ein Greifer oder eine oder mehrere Gabeln, ist am Arm angeordnet und um eine horizontale zweite Schwenkachse am Arm schwenkbar. Dabei sind die erste und zweite Schwenkachse parallel zueinander angeordnet. Weiter ist der Arm um eine vertikale Schwenkachse schwenkbar. Weiterhin ist die erste Schwenkachse an einer ersten Seite der vertikalen Schwenkachse mit einem vorbestimmten ersten Abstand von der vertikalen Schwenkachse angeordnet. Die horizontale erste und zweite Schwenkachse am einstückigen Arm sind dabei vorzugsweise jeweils nahe den freien Enden des Arms angeordnet.

Vorzugsweise ist die vertikale Schwenkachse eine dritte Schwenkachse, um welche der Turm schwenkbar ist. Alternativ ist die vertikale Schwenkachse eine vierte Schwenkachse, um die der Arm am Vertikalschlitten schwenkbar ist. Vorzugsweise ist der Turm dabei nicht schwenkbar ausgelegt. Ein Schwenkwinkel um die vertikale Schwenkachse ist vorzugsweise jeweils ≥ 180°.

Besonders bevorzugt ist die zweite Schwenkachse in einer ersten Endposition an einer zweiten Seite der vertikalen Schwenkachse mit einem zweiten Abstand angeordnet. Hierdurch kann in der ersten Endposition eine besonders kompakte Stellung des Arms erreicht werden, da die erste Schwenkachse an der ersten Seite der vertikalen Schwenkachse liegt und die zweite Schwenkachse an der gegenüberliegenden zweiten Seite der vertikalen Schwenkachse liegt. Besonders bevorzugt ist dabei der zweite Abstand größer als der erste Abstand.

Weiter bevorzugt ist die erste Schwenkachse zwischen der vertikalen Schwenkachse und einer Schiene der vertikalen Schienenanordnung am Turm angeordnet.

Gemäß einer weiteren bevorzugten Ausgestaltung der Erfindung ist die zweite Schwenkachse in einer zweiten Endposition ebenfalls an der zweiten Seite der vertikalen Schwenkachse mit einem dritten Abstand von der vertikalen Schwenkachse angeordnet. Der dritte Abstand ist vorzugsweise gleich wie der zweite Abstand von der vertikalen Schwenkachse. Dadurch ist auch in der zweiten Endposition des linearen Arms eine sehr kompakte Stellung des Arms möglich.

Besonders bevorzugt weist der am Vertikalschlitten angelenkte einstückige Arm einen Schwenkradius von ≥ 180°, insbesondere ca. 240°, auf. Bei einem Schwenkwinkel von 240° liegen die erste Endposition und die zweite Endposition dabei bevorzugt in einer gemeinsamen vertikalen Linie. Während des Schwenkvorgangs von der ersten Endposition in die zweite Endposition schwenkt die zweite Schwenkachse dabei zwei Mal über die dritte Schwenkachse.

Weiter bevorzugt schneidet die vertikale Schwenkachse in der ersten Endposition und/oder der zweiten Endposition des Arms den Arm selber. Dadurch wird eine besonders kompakte Position des Arms am Turm sichergestellt, um eine Drehbewegung mit sehr kleinem Störkreis ausführen zu können.

Ferner bevorzugt ist eine Zwangskopplungseinheit vorgesehen, welche zwischen der ersten und zweiten Schwenkachse vorgesehen ist, wobei die Zwangskopplungseinheit eingerichtet ist, den Manipulator in jeder Schwenkstellung des Arms horizontal ausgerichtet zu halten. Dadurch kann nur eine der beiden Schwenkachsen angetrieben sein und eine Steuerung der Handhabungsanordnung wird vereinfacht.

Besonders bevorzugt ist die erste Schwenkachse angetrieben und die zweite Schwenkachse ist ohne eigenen Antrieb. Dadurch kann der Antrieb der ersten Schwenkachse am Vertikalschlitten angeordnet werden und das Gewicht des Armes mit samt dem Manipulator reduziert werden.

Die vertikale, insbesondere dritte Schwenkachse ist vorzugsweise ebenfalls antreibbar. Vorzugsweise fallen eine Mittelachse des Turms und die dritte Schwenkachse auseinander. Somit sind die Mittelachse des Turms und die dritte Schwenkachse vorzugsweise parallel zueinander, so dass der Turm, wenn dieser geschwenkt wird, mit Abstand um die dritte vertikale Schwenkachse schwenkt, wodurch die Kompaktheit der Handhabungsanordnung weiter verbessert werden kann.

Der Turm ist bevorzugt auf einem Horizontalschlitten angeordnet, der vorzugsweise einen eigenen Antrieb aufweist. Wenn der Turm um eine dritte Schwenkachse schwenkbar ist, ist vorzugsweise ein Antrieb des Turmes am Horizontalschlitten angeordnet.

Bevorzugt ist ferner eine Grundplatte vorgesehen, auf welcher der Turm angeordnet ist. Die Grundplatte ist vorzugsweise drehbar am Horizontalschlitten angeordnet. Der Horizontalschlitten ist in Horizontalrichtung auf der horizontalen Schienenanordnung verfahrbar angeordnet.

Gemäß einer weiteren alternativen Ausgestaltung der Erfindung ist der Arm mit dem Turm verbunden, wobei der Arm relativ zum Turm um eine vertikale vierte Schwenkachse schwenkbar ist. Dies hat den Vorteil, dass der Turm nicht geschwenkt werden muss. Ein Halter weist vorzugsweise eine erste und zweite Halteplatte oder Haltearme oder dgl. auf, zwischen welchen der Arm um die erste Schwenkachse in Horizontalrichtung schwenkbar ist.

Weiter bevorzugt umfasst der Halter eine dritte und eine vierte horizontale Halteplatte, welche am Vertikalschlitten angeordnet sind. Die dritte und vierte Halteplatte dienen dabei als Lager für die vertikale Schwenkachse, um welche die erste und zweite Halteplatte mitsamt dem Arm verschwenkbar sind.

Die Zwangskopplungseinheit, welche die erste Schwenkachse mit der zweiten Schwenkachse verbindet, umfasst vorzugsweise einen Kettentrieb oder einen Riementrieb. Dadurch kann eine kostengünstige und einfach aufgebaute Zwangskopplung zwischen den beiden Schwenkachsen realisiert werden. Dabei ist die Zwangskopplung auch sehr robust ausgestaltet.

Gemäß einer weiteren bevorzugten Ausgestaltung der Erfindung umfasst die Handhabungsanordnung ferner ein Regalsystem, in welchem die Werkstücke und/oder Werkzeuge angeordnet sind. Das Regalsystem ist vorzugsweise derart vorgesehen, dass der Turm der Handhabungsanordnung zwischen dem Regalsystem und einer Werkzeugmaschine angeordnet ist. Dadurch können kurze Wege für die Handhabung von Werkzeugen und/oder Werkstücken zwischen dem Regalsystem und der Werkzeugmaschine realisiert werden.

Vorzugsweise ist eine einzige Handhabungsanordnung in einem Schrank gemeinsam mit dem Regalsystem integriert. Besonders bevorzugt sind dabei mehrere Schränke und mehrere Regalsysteme in Modulbauweise vorgesehen, welche nebeneinander angeordnet sind. Dabei wird bevorzugt nur eine einzige Handhabungsanordnung verwendet, um mehrere Regalsysteme und vorzugsweise auch mehrere Werkzeugmaschinen zu bedienen.

Vorzugsweise sind mehrere Regalsysteme nebeneinander in Reihe angeordnet und über eine gemeinsame horizontale Schienenanordnung verbunden. Dadurch kann der Turm vor den Regalsystemen verfahren werden und in den Regalsystemen eine Vielzahl von unterschiedlichen Werkzeugen und/oder eine Vielzahl von Werkstücken gelagert werden. Die einzelnen Regalsysteme sind vorzugsweise über mechanische Schnittstellen, beispielsweise Öffnungen und entsprechend ausgebildete Vorsprünge, miteinander verbunden.

Besonders bevorzugt sind das Regalsystem und die Handhabungsanordnung in einem Schrank angeordnet. Dadurch können die im Regalsystem befindlichen Werkzeuge und/oder Werkstücke geschützt werden. Der Schrank weist vorzugsweise Türen auf, um einen Zugang von außen zu ermöglichen. Die Türen sind vorzugsweise an der entgegengesetzten Seite der Seite angeordnet, an welcher der Turm der Handhabungsanordnung angeordnet ist.

Ferner betrifft die Erfindung eine Werkzeugmaschinenanordnung, umfassend eine Werkzeugmaschine und eine erfindungsgemäße Handhabungsanordnung. Die Handhabungsanordnung ist dabei vor der Werkzeugmaschine angeordnet. Besonders bevorzugt ist ein Turm der Handhabungsanordnung dabei zwischen der Werkzeugmaschine und einem Regalsystem, in welchem Werkzeuge und/oder Werkstücke gelagert werden, angeordnet. Die Werkzeugmaschinenanordnung umfasst vorzugsweise mehrere Werkzeugmaschinen, welche bevorzugt in Reihe angeordnet sind und durch eine gemeinsame Handhabungsanordnung mit Werkzeugen und/oder Werkstücken bestückt werden können und ein entsprechender Austausch von Werkzeugen und/oder Werkstücken erfolgt.

Die Werkzeugmaschine ist vorzugsweise eine spanabhebende Maschine, insbesondere eine Fräsmaschine oder eine Bohrmaschine oder eine Drehmaschine.

Nachfolgend werden unter Bezugnahme auf die begleitende Zeichnung bevorzugte Ausführungsbeispiele der Erfindung im Detail beschrieben. In der Zeichnung ist:
- Fig. 1: eine schematische, perspektivische Ansicht einer Handhabungsanordnung gemäß einem ersten bevorzugten Ausführungsbeispiel der Erfindung in einer ersten Stellung,
- Fig. 2: eine schematische, perspektivische Darstellung der Handhabungsanordnung von Fig. 1 in einer zweiten Stellung,
- Fig. 3: eine schematische, perspektivische Ansicht der Handhabungsanordnung von Fig. 1 in einer dritten Stellung,
- Fig. 4: eine schematische, perspektivische Ansicht in einer vierten, sehr kompakten Stellung,
- Fig. 5: eine schematische Draufsicht auf eine Werkzeugmaschinenanordnung mit einer Werkzeugmaschine und einer Handhabungsanordnung gemäß den Fig. 1 bis 4,
- Fig. 6: eine perspektivische Ansicht der Handhabungsanordnung von Fig. 1 in einem Schranksystem,
- Fig. 7 bis 11: verschiedene Stellungen des Arms der Handhabungsanordnung aus Sicht der horizontalen Schienenanordnung,
- Fig. 12: eine Ansicht der Handhabungsanordnung von oben in einer ersten Stellung des Arms,
- Fig. 13: eine Ansicht der Handhabungsanordnung von oben in einer zweiten Stellung des Arms,
- Fig. 14: eine alternative Draufsicht auf eine Werkzeugmaschinenanordnung mit mehreren Schranksystemen, und
- Fig. 15 und 16: perspektivische Ansichten einer Handhabungsanordnung gemäß einem zweiten Ausführungsbeispiel der Erfindung aus unterschiedlichen Perspektiven.

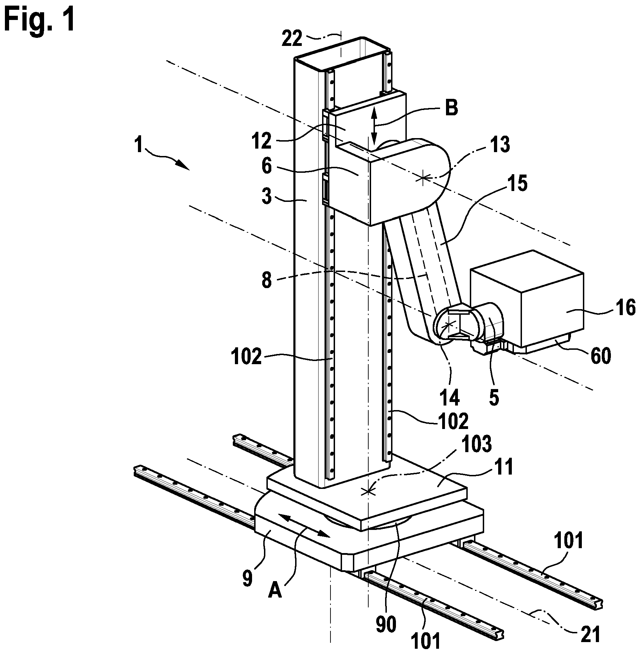

Nachfolgend wird unter Bezugnahme auf die Fig. 1 bis 14 eine Handhabungsanordnung 1 und eine Werkzeugmaschinenanordnung 100 gemäß einem ersten Ausführungsbeispiel der Erfindung im Detail beschrieben.

Wie aus Fig. 1 ersichtlich ist, umfasst die Handhabungsanordnung 1 eine horizontale Schienenanordnung 101, auf welcher ein Horizontalschlitten 9 entlang einer Horizontalachse 21 verfahrbar ist.

Die horizontale Schienenanordnung 101 umfasst zwei parallel zueinander angeordnete Schienen.

Ferner umfasst die Handhabungsanordnung einen Turm 3 mit einer Mittelachse 22 in Vertikalrichtung B, welcher mittels einer Grundplatte 11 auf dem Horizontalschlitten 9 angeordnet ist. Um den Horizontalschlitten 9 mit samt dem Turm 3 in Horizontalrichtung A zu verfahren, weist der Horizontalschlitten 9 einen nicht dargestellten Antrieb auf.

Ferner umfasst die Handhabungsanordnung eine vertikale Schienenanordnung 102, welche am Turm 3 angeordnet ist. Wie aus Fig. 1 ersichtlich ist, umfasst die vertikale Schienenanordnung 102 zwei separate, parallele Schienen.

Ein Vertikalschlitten 12 ist auf der vertikalen Schienenanordnung 102 in Vertikalrichtung B verfahrbar. Am Vertikalschlitten 12 ist mittels eines Halters 6 ein einziger, einstückiger, geradliniger Arm 15 schwenkbar angeordnet. Der gelenkfreie, starre Arm 15 ist dabei um eine erste Schwenkachse 102 zwei separate, parallele Schienen. Ende des Arms 15 angeordnet und am Vertikalschlitten 12 ortsfest angeordnet. Am Arm 15 ist ferner eine zweite Schwenkachse 14 vorgesehen, an welcher ein Manipulator 5, der als Greifer ausgebildet ist, schwenkbar angeordnet ist. An dem Manipulator 5 können Paletten 60 mit Werkstücken 16 oder auch nicht dargestellte Werkzeuge gehalten werden.

Die erste Schwenkachse 13 ist dabei parallel zur zweiten Schwenkachse 14. Ferner sind die beiden Schwenkachsen 13, 14 senkrecht zur vertikalen Mittelachse 22 angeordnet.

Im Inneren des Arms 15 ist eine Zwangskopplungseinheit 8 angeordnet. Die Zwangskopplungseinheit 8 zwischen der ersten Schwenkachse 13 und der zweiten Schwenkachse 14 ist dabei eingerichtet, den Manipulator 5 in jeder Schwenkstellung des Arms 15 horizontal ausgerichtet zu halten.

Die Fig. 1 bis 4 zeigen dabei drei unterschiedliche verschwenkte Zustände des Arms 15.

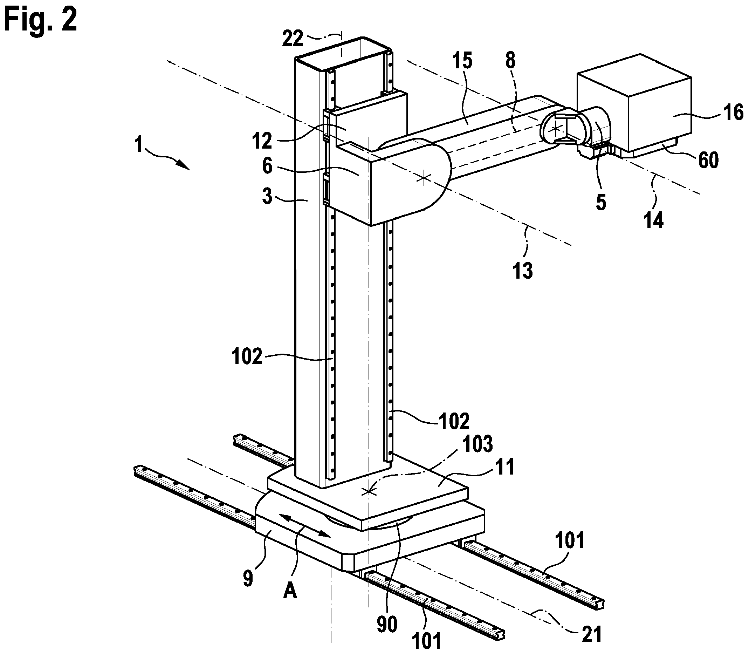

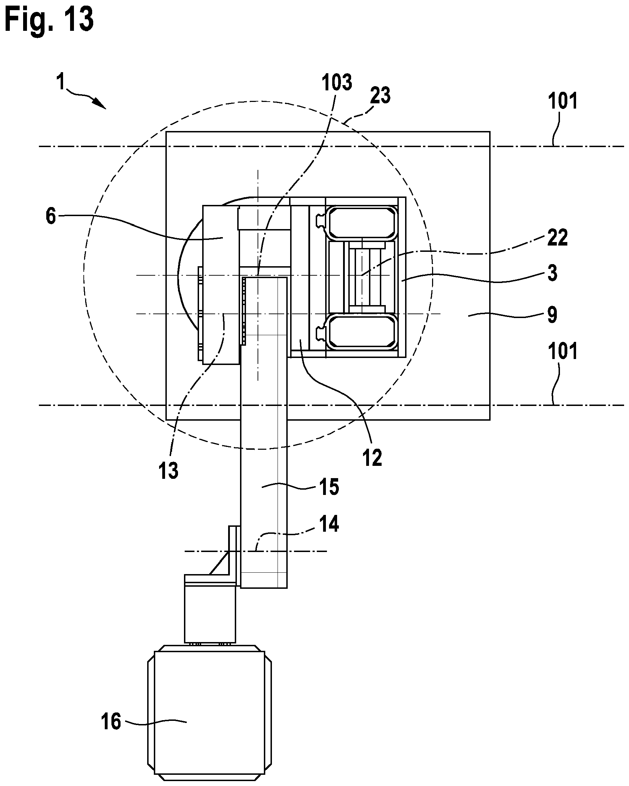

Fig. 2 zeigt einen Verschwenkzustand, in dem der Arm 15 vollständig horizontal ausgerichtet ist. Dies ist die von Turm 3 am weitesten entfernte Position des Manipulators 5. Dies ist auch in der Draufsicht von Fig. 13 gezeigt.

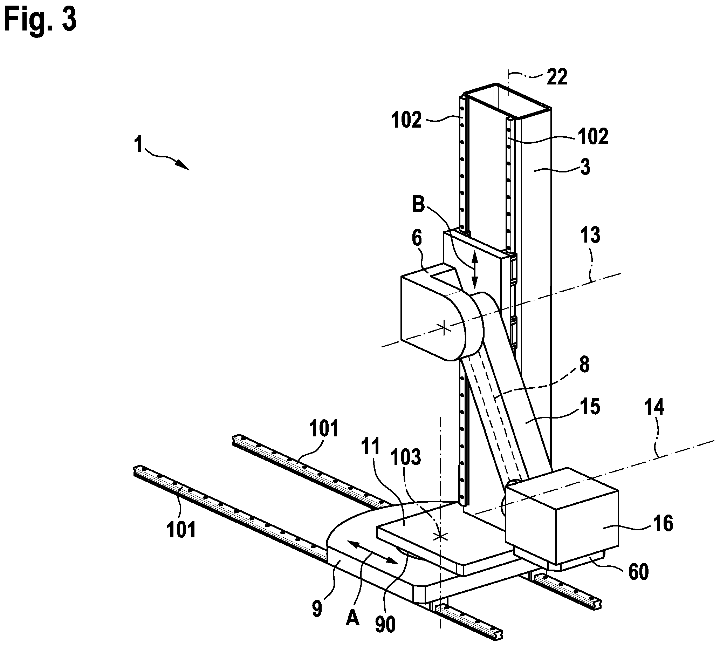

Fig. 3 zeigt einen Zustand, in welchem der Arm 15 in eine untere Position verschwenkt ist. Außerdem befindet sich die Grundplatte 11 in einer anderen Schwenklage (um 90° nach rechts gedreht) um die vertikale, dritte Schwenkachse 103 zum Horizontalschlitten 9.

Fig. 1 zeigt eine mittlere Position des Arms 15.

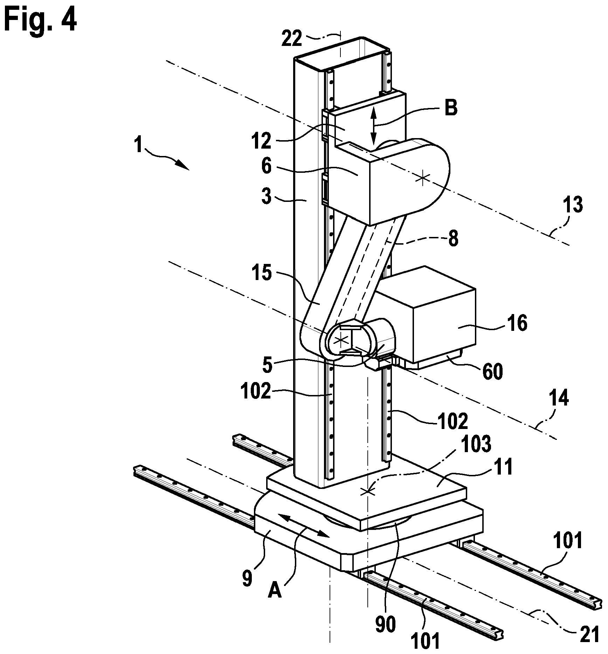

Fig. 4 zeigt eine Position des Armes 15, bei der eine besonders kompakte Handhabung möglich ist. Diese Position wird besonders bevorzugt während eines Verfahr-Vorgangs auf der horizontalen Schienenanordnung 101 oder während eines Schwenkvorgangs der Grundplatte 11 mit Turm 3 um die dritte Schwenkachse 103 eingenommen und nachfolgend als erste Endposition bezeichnet.

Wie somit aus den Fig. 1 bis 4 deutlich wird, kann der Arm 15 somit einfach durch Schwenken um die erste Schwenkachse 13 in unterschiedliche Positionen gebracht werden. An der ersten Schwenkachse 13 ist ein Antrieb vorgesehen, um die Bewegung des Armes 15 zu realisieren. An der zweiten Schwenkachse 14, welche mit der ersten Schwenkachse 13 zwangsgekoppelt ist, muss kein Antrieb vorgesehen sein.

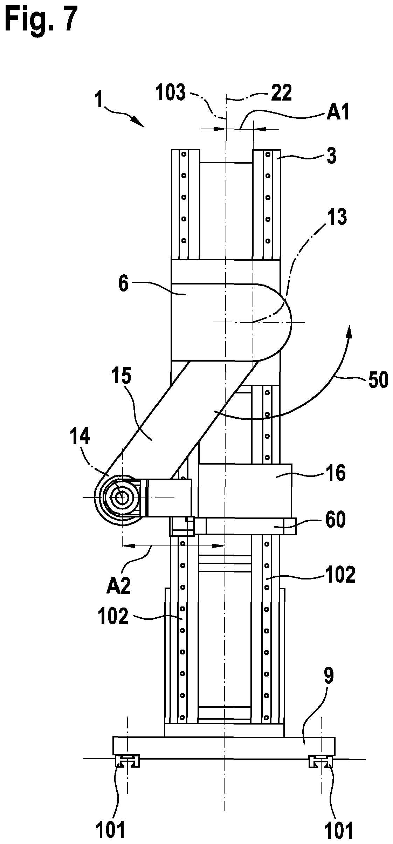

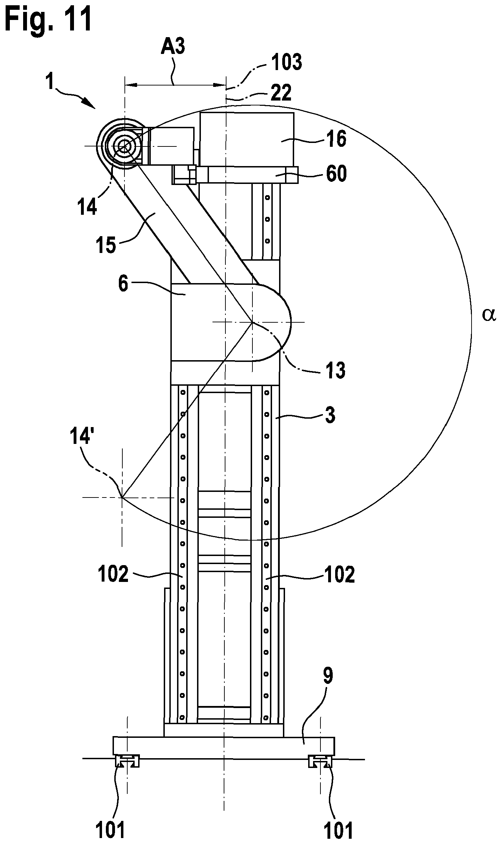

Zur Verdeutlichung der Kompaktheit der Handhabungsanordnung 1 wird nochmals auf die Fig. 7 bis 11 Bezug genommen, welche eine Bewegung der Handhabungsanordnung von einer ersten Endposition (Fig. 7) in eine zweite Endposition (Fig. 11) zeigen.

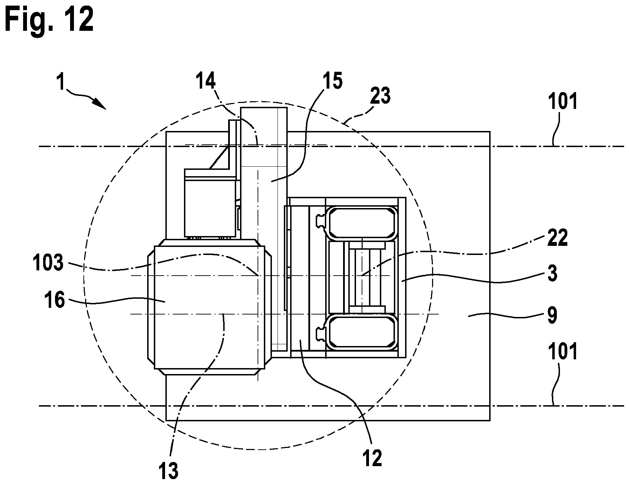

Die Fig. 12 und 13 zeigen zwei entsprechende Draufsichten auf die Handhabungsanordnung 1 von oben in zwei unterschiedlichen Positionen. Hierbei ist auch ein Störkreis 23 bei Rotation um die vertikale dritte Schwenkachse 103 dargestellt, welchen die Handhabungsanordnung 1 in der kompaktesten Stellung aufweist.

Fig. 7 zeigt aus Sicht in Richtung der horizontalen Schienenanordnung 101 entsprechend Fig. 4 die erste Endposition des Arms 15 für eine besonders kompakte Handhabung. Hierbei ist, wie aus Fig. 7 deutlich ist, die erste Schwenkachse 13 am Turm 3 an einer ersten Seite der dritten Schwenkachse 103 mit einem Abstand A1 angeordnet. Hierbei ist die erste Schwenkachse 13 zwischen der dritten Schwenkachse 103 und einer der Schienen der vertikalen Schienenanordnung 102 angeordnet. Die dritte Schwenkachse 103 und die Mittelachse 22 überlagern sich in dieser Ansicht. Die erste Schwenkachse 13 ist somit rechts von der vertikalen dritten Schwenkachse 103 angeordnet.

Die zweite Schwenkachse 14 ist an einer zweiten Seite der dritten Schwenkachse 103 in der ersten Endposition angeordnet und um einen Abstand A2 von der dritten Schwenkachse 103 beabstandet. Dabei ist der zweite Abstand A2 größer als der erste Abstand A1. Wie aus Fig. 7 ersichtlich ist, liegt die zweite Schwenkachse 14 in der ersten Endposition außerhalb des Turms 3. Somit ist in der ersten Endposition die zweite Schwenkachse 14 links von der vertikalen dritten Schwenkachse 103. In dieser ersten Endposition ergibt sich der sehr kleine Störkreis 23, der in Fig. 12 gezeigt ist. Dieser Störkreis 23 steht nur minimal über die Schienen der horizontalen Schienenanordnung 101 vor.

Fig. 11 zeigt die zweite Endposition der Handhabungsanordnung, bei der der einstückige Arm 15, ausgehend von der ersten Endposition um 240° um die erste Schwenkachse 13 geschwenkt ist. Die erste Endposition ist in Fig. 11 mit dem Bezugszeichen 14' eingezeichnet. In der zweiten Endposition befindet sich die zweite Schwenkachse 14 um einen Abstand A3 an der zweiten Seite von der dritten Schwenkachse 103 beabstandet. Die ersten und zweiten Endpositionen liegen vorzugsweise vertikal übereinander.

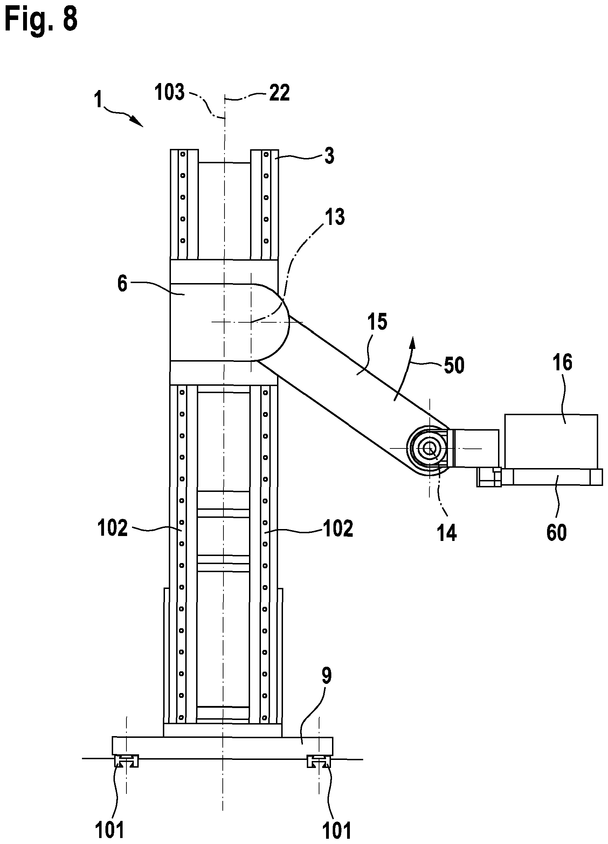

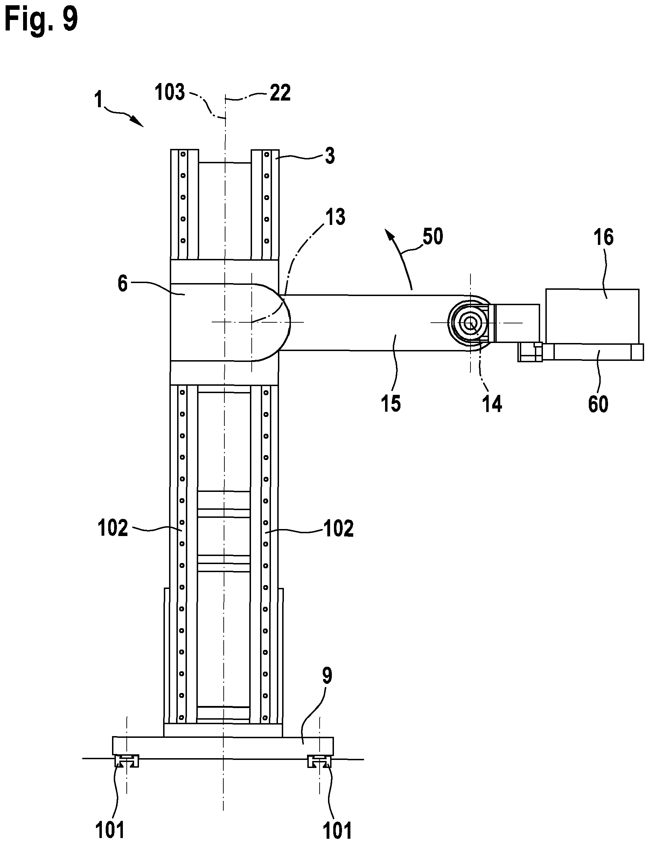

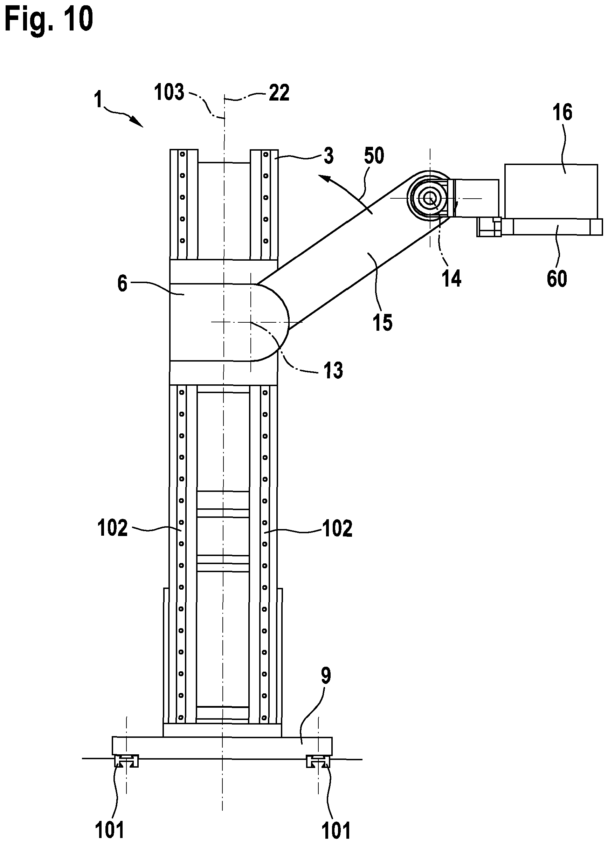

Durch die Zwangskopplung zwischen der ersten Schwenkachse 13 und der zweiten Schwenkachse 14 kann dabei ein Werkstück 16 während des gesamten Verfahrvorgangs von der ersten Endposition in die zweite Endposition in Horizontalrichtung ausgerichtet bleiben. Dies ist in den Fig. 8, 9 und 10 verdeutlicht, wobei Fig. 9 den maximal ausgefahrenen einstückigen Arm 15 zeigt. In dieser Position wird beispielsweise das Werkstück 16 in einer Maschine positioniert. Die Fig. 8 und 10 zeigen dabei jeweils Zwischenpositionen zwischen der vollständig ausgefahrenen Position von Fig. 9 und den beiden Endpositionen in den Fig. 7 und 11.

Somit kann in den beiden Endpositionen (Fig. 7 und Fig. 11) des einstückigen Arms 15 eine sehr kompakte Anordnung des Werkstücks 16, beispielsweise für einen Verfahrvorgang realisiert werden. Dabei kann der Arm 15 sehr einfach als einstückiger, linearer Arm ausgebildet sein, an dessen beiden Enden jeweils eine der ersten und zweiten Schwenkachse 13, 14 angeordnet ist. Die erste Schwenkachse 13 ist dabei fest am Vertikalschlitten 12 angelenkt. Der einstückige Arm 15 kann in diesem Ausführungsbeispiel um den Winkel α von 240° um die erste Schwenkachse 13 geschwenkt werden. Durch die außermittige Positionierung der ersten Schwenkachse 13 am Turm 3 kann somit in den Endpositionen eine einen geringen Bauraum einnehmende Positionierung des einstückigen Arms 15 mitsamt dem Werkstück 16 erreicht werden.

Der Verschwenkvorgang ist ausgehend von der ersten Endposition in Fig. 7 in den Fig. 7 bis 11 jeweils durch den Pfeil 50 verdeutlicht. Das Rückschwenken aus der zweiten Endposition in die erste Endposition ist in entsprechend entgegengesetzter Richtung möglich.

Der Turm 3 ist ferner um die vertikale, dritte Schwenkachse 103, die in Vertikalrichtung verläuft, auf dem Horizontalschlitten 9 schwenkbar. Dadurch kann der Manipulator 5 alle Positionen auf beiden Seiten der horizontalen Schienenanordnung 101 erreichen. Die Grundplatte 11, auf welcher der Turm 3 angeordnet ist, ist dabei um mindestens 180° um die vertikale, dritte Schwenkachse 103, die parallel zur Mittelachse 22 angeordnet ist, schwenkbar.

Wie weiter aus Fig. 1 ersichtlich ist, fallen die Mittelachse 22 des Turms 3 und die dritte Schwenkachse 103 auseinander. Dadurch kann der Arm 15 in der dritten Schwenkachse 103 liegen, was zu einer besonders kompakten Bauform führt, wie auch aus Figur 12 ersichtlich ist.

Wie die Fig. 7 bis 11 auch verdeutlichen, ist die erste Schwenkachse 13 auch immer rechts von der vertikalen dritten Schwenkachse 103 angeordnet. Die zweite Schwenkachse 14 ist in der ersten und zweiten Endposition links von der vertikalen dritten Schwenkachse 103 angeordnet. Bei der Bewegung des Arms 15 von der ersten in die zweite Endposition wandert die zweite Schwenkachse dann auf die rechte Seite der dritten Schwenkachse 103.

Der Arm 15 ist mittels des Halters 6 an dem Vertikalschlitten 12 fixiert. Der Halter 6 ist in diesem Ausführungsbeispiel L-förmig, kann jedoch auch anders ausgebildet sein.

Somit weist die Handhabungsanordnung 1 zum Verfahren einen Antrieb an der horizontalen Schienenanordnung 101, einen Antrieb an der vertikalen Schienenanordnung 102 und einen Antrieb an der ersten Schwenkachse 13 auf. Ferner ist ein Antrieb (nicht gezeigt) an der vertikalen, dritten Schwenkachse 103, um welche der Turm 3 auf der Grundplatte 11 mit Hilfe eines Lagers 90 relativ zu dem Horizontalschlitten 9 verschwenkbar ist, vorgesehen.

Der Manipulator 5 kann somit durch Verfahren der Schlitten in Horizontalrichtung A und Vertikalrichtung B und Verschwenken um die vertikale, dritte Schwenkachse 103 und die erste Schwenkachse 13 in alle Positionen in einem Umkreis von 360° um die vertikale, dritte Schwenkachse 103 bewegt werden. Dabei bleibt ein Werkstück 16 immer in der horizontalen Position.

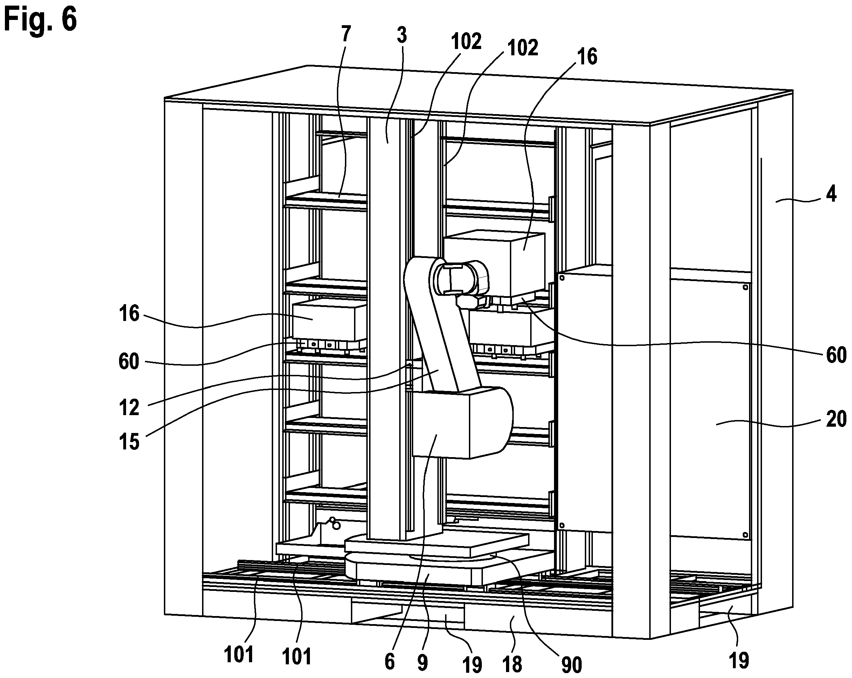

Fig. 6 zeigt, wie die Handhabungsanordnung 1 in einen Schrank 4 eingebaut ist. An einer Rückwand des Schranks ist ein Regalsystem 7 angeordnet, auf welcher Paletten 60 mit Werkstücken 16 und/oder Werkzeugen angeordnet sind. Das Bezugszeichen 20 bezeichnet einen Steuerschrank mit einer Steuerungseinheit für die Handhabungsanordnung 1. Die horizontale Schienenanordnung 101 ist an einem Boden 18 des Schrankes 4 angeordnet. Die Handhabungsanordnung 1 ist somit im Inneren des Schranks verfahrbar. Weiterhin sind im Boden 18 des Schranks Ausnehmungen 19 vorgesehen, welche einem einfachen Transport mit einem Hubwagen oder Gabelstapler für die Installation dienen und gegebenenfalls auch als mechanische Schnittstellen einerseits zu einer Maschine (frontseitige Ausnehmung) und andererseits zu einem möglichen benachbarten Schrank (seitliche Ausnehmung) vorgesehen sind.

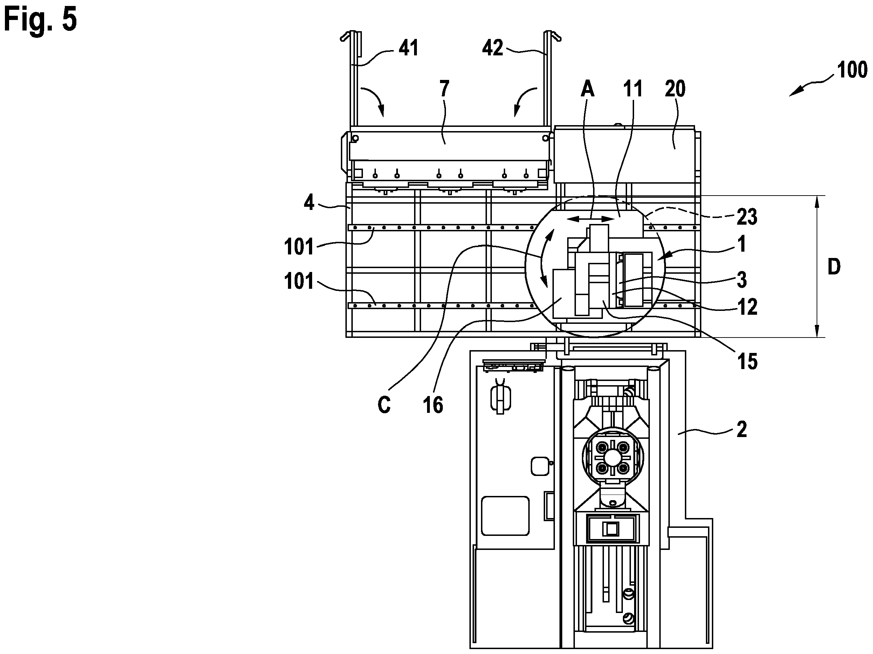

Die Anordnung des Schrankes 4 vor einer Werkzeugmaschine 2 ist im Detail aus Fig. 5 ersichtlich. Hierbei wird deutlich, dass ein Abstand D zwischen dem Regalsystem 7 und der Werkzeugmaschine 2 sehr klein ist, da die Handhabungsanordnung 1 auf der horizontalen Schienenanordnung 101 innerhalb des Schrankes 4 vor der Werkzeugmaschine 2 linear nach links und rechts verfahren werden kann und sich dabei auf den Punkt um die vertikale, dritte Schwenkachse 103 um mindestens 180° drehen kann (Pfeil C in Fig. 5). Der Störkreis 23 ist dabei sehr klein. Dabei weist die Handhabungsanordnung 1 einen sehr einfachen und kompakten Aufbau auf, der eine Drehung auf kleinstem Raum mit Palette 60 und Werkstück 16 erlaubt, wie aus Fig. 4 deutlich wird.

Fig. 5 zeigt ebenfalls, dass der Schrank 4 Türen 41, 42 aufweisen kann, um beispielsweise neue Werkstücke und/oder einen Austausch von Werkzeugen im Schrank 4 von der Seite an dem Regalsystem 7, die von der Handhabungsanordnung 1 abgewandt ist, vorzunehmen.

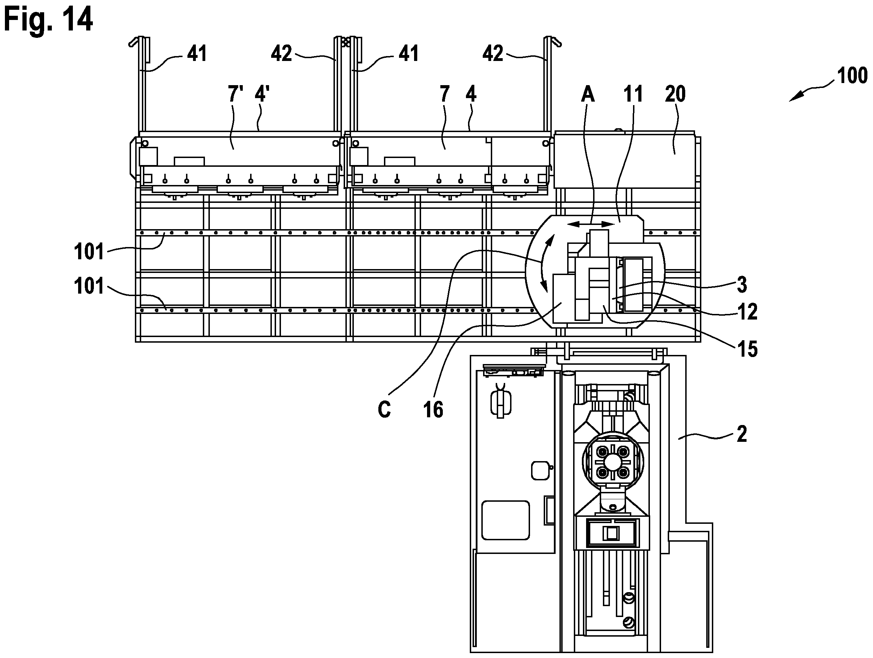

Fig. 14 zeigt einen alternativen Aufbau einer Werkzeugmaschinenanordnung 100, bei der zusätzlich zu einem ersten Schrank 4 ein zweiter Schrank 4' vorgesehen ist. Dies macht den modularen Aufbau der Werkzeugmaschinenanordnung 100 deutlich. Es sei angemerkt, dass selbstverständlich auch mehrere Werkzeugmaschinen 2 in Reihe angeordnet werden können und mehrere Schranksysteme 4 vor einer Vielzahl von Werkzeugmaschinen 2 positioniert werden können. Dabei bilden die jeweiligen horizontalen Schienenanordnungen 101 im montierten Zustand eine gemeinsame Schienenanordnung, auf welcher die Handhabungsanordnung 1 linear vor allen Werkzeugmaschinen 2 verfahrbar ist. Es sei weiter angemerkt, dass eine gemeinsame Steuerungseinheit 20 für alle Regalsysteme 7 und Werkzeugmaschinen 2 vorgesehen sein kann.

Somit können alle Bestandteile der Handhabungsanordnung 1 in einem Schrank 4 verbaut werden und dieser kann noch vor Auslieferung an einen Kunden vollständig montiert, in der Herstellungsfabrik getestet und in Betrieb genommen werden. Weitere Schränke 4' können an den ersten Schrank 4 schnell und einfach angesetzt werden. Dabei ist dann eine gemeinsame horizontale Schienenanordnung 101 die durch alle Schränke 4 und 4' verläuft vorgesehen, aber nur eine einzige Handhabungsanordnung 1 im ersten Schrank 4 vorhanden. Die Handhabungsanordnung 1 kann in die angesetzten Schränke 4' auf der gemeinsamen Schienenanordnung 101 verfahren. Auf einfache Weise können hierbei mechanische Verbindungshilfen vorgesehen sein, um den modularen Aufbau schnell und einfach umsetzen zu können.

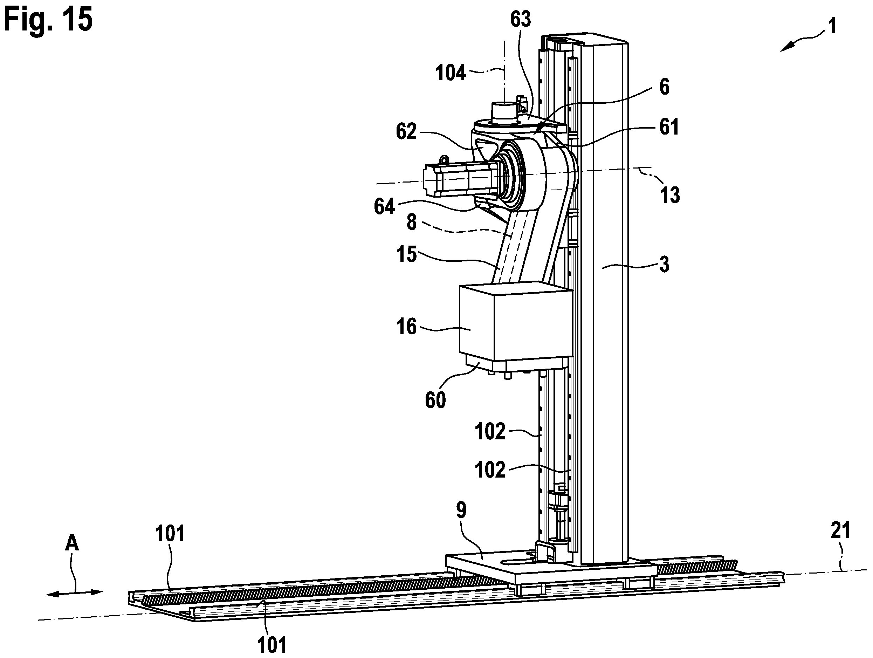

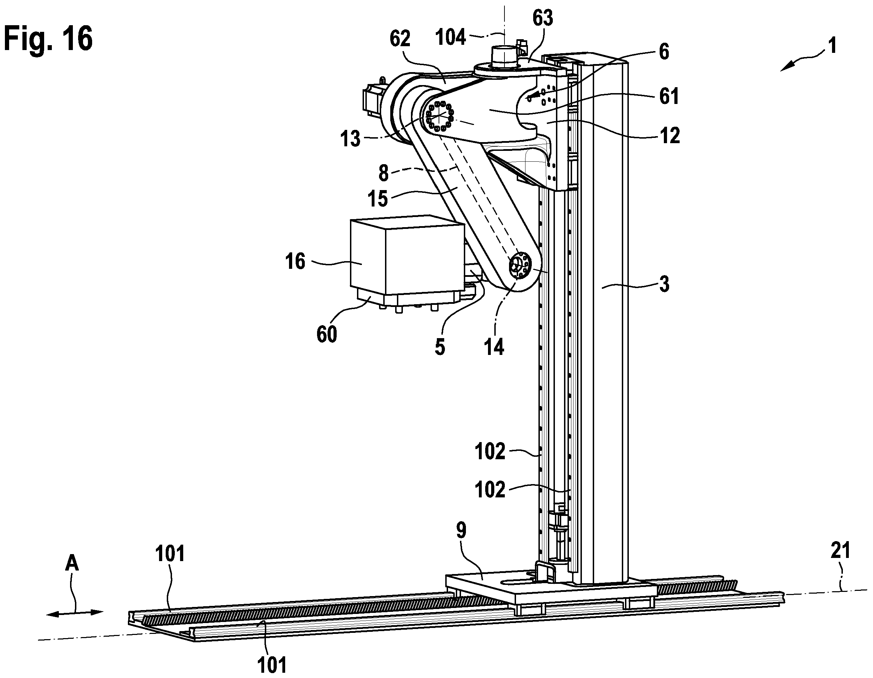

Die Fig. 15 und 16 zeigen eine Handhabungsanordnung 1 gemäß einem zweiten Ausführungsbeispiel der Erfindung. Gleiche bzw. funktional gleiche Teile sind mit den gleichen Bezugszeichen bezeichnet.

Wie aus Fig. 15 ersichtlich ist, ist im Unterschied zum ersten Ausführungsbeispiel im zweiten Ausführungsbeispiel der Turm 3 ortsfest auf dem Horizontalschlitten 9 fixiert. Der Turm 3 ist dabei auf dem Horizontalschlitten 9 außermittig angeordnet. Somit ist der Turm 3 selbst nicht drehbar. Allerdings ist eine weitere vertikale vierte Schwenkachse 104 am Halter 6, welcher am Vertikalschlitten 12 befestigt ist, vorgesehen. Um die vertikale Schwenkachse 104 können eine erste und eine zweite Halteplatte 61 und 62 geschwenkt werden. Zwischen den Halteplatten 61 und 62 wird der Arm 15 gehalten. Die horizontale erste Schwenkachse 13 geht durch die Halteplatten 61 und 62. Um diese erste Schwenkachse 13 kann der Arm 15 wie im ersten Ausführungsbeispiel geschwenkt werden. Die vertikale Schwenkachse 104 ist senkrecht zur Horizontalachse 21. Eine dritte und vierte horizontale Halteplatte 63 und 64 nehmen die erste und zweite vertikale Halteplatte 61, 62 um die Schwenkachse 104 schwenkbar zwischen sich auf. Die dritte und vierte horizontale Halteplatte 63, 64 sind am Vertikalschlitten 12 fixiert. Die Handhabungsanordnung 1 kann gemäß dem zweiten Ausführungsbeispiel mit einer kleineren und kompakten, vertikalen Schwenkachse 104 als im ersten Ausführungsbeispiel vorgesehen werden und baut ebenfalls sehr kompakt. Es sei angemerkt, dass es auch möglich ist, dass der Turm 3 um eine dritte Schwenkachse 103 entsprechend dem ersten Ausführungsbeispiel schwenkbar ist. Ansonsten entspricht dieses Ausführungsbeispiel dem vorhergehenden Ausführungsbeispiel, sodass auf die dort gegebene Beschreibung verwiesen werden kann.

### Bezugszeichenliste

- 1: Handhabungsanordnung
- 2: Werkzeugmaschine
- 3: Turm
- 4, 4': Schrank
- 5: Manipulator
- 6: Halter
- 7: Regalsystem
- 7': zweites Regalsystem
- 8: Zwangskopplungseinheit
- 9: Horizontalschlitten
- 11: Grundplatte
- 12: Vertikalschlitten
- 13: horizontale, erste Schwenkachse
- 14: horizontale, zweite Schwenkachse
- 15: Arm
- 16: Werkstück
- 18: Boden
- 19: Ausnehmung
- 20: Steuerungseinheit
- 21: Horizontalachse
- 22: Mittelachse des Turms
- 23: Störkreis
- 41: Tür
- 42: Tür
- 50: Verschwenkvorgang
- 60: Palette
- 61: vertikale, erste Halteplatte
- 62: vertikale, zweite Halteplatte
- 63: horizontale, dritte Halteplatte
- 64: horizontale, vierte Halteplatte
- 90: Lager
- 100: Werkzeugmaschinenanordnung
- 101: horizontale Schienenanordnung
- 102: vertikale Schienenanordnung
- 103: vertikale, dritte Schwenkachse
- 104: vertikale Schwenkachse direkt am Halter
- A: Horizontalrichtung
- A1: erster Abstand der ersten Schwenkachse zur Vertikalachse
- A2: zweiter Abstand der zweiten Schwenkachse zur Vertikalachse in der ersten Endposition
- A3: dritter Abstand der zweiten Schwenkachse zur Vertikalachse in der zweiten Endposition
- B: Vertikalrichtung
- C: 360°-Drehung
- D: Abstand des Regalsystems zur Werkzeugmaschine

## Patentansprüche

1. Handhabungsanordnung (1) zum Handhaben von Werkzeugen und/oder Werkstücken (16) einer Werkzeugmaschine (2) umfassend
- eine horizontale Schienenanordnung (101),
- einen vertikalen Turm (3), welcher auf der horizontalen Schienenanordnung (101) in Richtung einer Horizontalachse (21) verfahrbar angeordnet ist,
- eine vertikale Schienenanordnung (102), welche am Turm (3) angeordnet ist,
- einen Vertikalschlitten (12), welcher auf der vertikalen Schienenanordnung (102) in Vertikalrichtung (B) verfahrbar ist,
- genau einen einstückigen, starren Arm (15), welcher am Vertikalschlitten (12) angeordnet ist, und
- einen Manipulator (5), welcher am Arm (15) angeordnet ist und um eine horizontale, zweite Schwenkachse (14) am Arm (15) schwenkbar ist,
- **dadurch gekennzeichnet, dass** der Arm (15) um eine horizontale, erste Schwenkachse (13) am Vertikalschlitten (12) schwenkbar ist, wobei der Arm (15) um eine vertikale Schwenkachse (103; 104) schwenkbar ist,
- wobei die erste Schwenkachse (13) parallel zur zweiten Schwenkachse (14) ist, und
- wobei die erste Schwenkachse (13) an einer ersten Seite der vertikalen Schwenkachse (103; 104) mit einem ersten Abstand (A1) von der vertikalen Schwenkachse (103; 104) angeordnet ist.

2. Handhabungsanordnung (1) nach Anspruch 1, wobei die vertikale Schwenkachse eine dritte Schwenkachse (103) ist, um welche der Turm (3) schwenkbar ist, oder
wobei die vertikale Schwenkachse eine vierte Schwenkachse (104) ist, um die der Arm am Vertikalschlitten (12) schwenkbar ist.

3. Handhabungsanordnung (1) nach Anspruch 1 oder 2, wobei die zweite Schwenkachse (14) in einer ersten Endposition an einer zweiten Seite der vertikalen Schwenkachse (103; 104) gegenüber der ersten Seite mit einem zweiten Abstand (A2) angeordnet ist.

4. Handhabungsanordnung (1) nach Anspruch 3, wobei die zweite Schwenkachse (14) in einer zweiten Endposition an der zweiten Seite der vertikalen Schwenkachse (103; 104) gegenüber der ersten Seite mit einem dritten Abstand (A3) angeordnet ist.

5. Handhabungsanordnung (1) nach Anspruch 3 oder 4, wobei die vertikale Schwenkachse (103; 104) in der ersten und/oder zweiten Endposition den Arm (15) schneidet.

6. Handhabungsanordnung (1) nach einem der vorhergehenden Ansprüche, wobei der einstückige starre Arm (15) um die erste Schwenkachse (13) in einem Winkel (α) von ≥ 180° schwenkbar ist.

7. Handhabungsanordnung (1) nach einem der vorhergehenden Ansprüche, wobei eine Zwangskopplungseinheit (8) zwischen der ersten Schwenkachse (13) und der zweiten Schwenkachse (14) vorgesehen ist, welche eingerichtet ist, den Manipulator (5) in jeder Schwenkstellung des Arms (15) horizontal ausgerichtet zu halten.

8. Handhabungsanordnung (1) nach Anspruch 7, wobei die erste Schwenkachse (13) mittels eines Antriebs antreibbar ist und die zweite Schwenkachse (14) ohne eigenen Antrieb ist.

9. Handhabungsanordnung (1) nach Anspruch 2, wobei eine Mittelachse (22) des Turms (3) und die dritte Schwenkachse (103) auseinanderfallen und zueinander parallel sind.

10. Handhabungsanordnung (1) nach einem der vorherigen Ansprüche, wobei der Turm (3) auf einem Horizontalschlitten (9) angeordnet ist, wobei der Horizontalschlitten (9) auf der horizontalen Schienenanordnung (101) in Richtung der Horizontalachse (21) verfahrbar ist.

11. Handhabungsvorrichtung nach Anspruch 10, wobei eine Grundplatte (11) drehbar auf dem Horizontalschlitten (9) angeordnet ist, wobei der Turm (3) auf der Grundplatte (11) fixiert ist.

12. Handhabungsanordnung (1) nach einem der vorherigen Ansprüche, wobei der Arm (15) über eine erste und zweite vertikale Halteplatte (61, 62) eines Halters (6) mit dem Vertikalschlitten (12) verbunden ist.

13. Handhabungsanordnung (1) nach Anspruch 7, wobei die Zwangskopplungseinheit (8) einen Kettentrieb oder einen Riementrieb aufweist.

14. Handhabungsanordnung (1) nach einem der vorherigen Ansprüche, ferner umfassend ein Regalsystem (7), in welchem die Werkstücke (16) und/oder Werkzeuge gelagert sind und/oder
wobei eine einzige Handhabungsanordnung in einen Schrank (4) gemeinsam mit dem Regalsystem (7) integriert ist.

15. Werkzeugmaschinenanordnung (100), umfassend wenigstens eine Werkzeugmaschine (2) und eine Handhabungsanordnung (1) nach einem der vorhergehenden Ansprüche.

## Claims

1. A handling arrangement (1) for handling tools and/or workpieces (16) of a machine tool (2) comprising
- a horizontal rail arrangement (101),
- a vertical tower (3) which is arranged on the horizontal rail arrangement (101) so as to be movable in the direction of a horizontal axis (21)
- a vertical rail arrangement (102) which is arranged on the tower (3)
- a vertical carriage (12) which is movable on the vertical rail arrangement (102) in the vertical direction (B)
- exactly one one-piece rigid arm (15), which is arranged on the vertical carriage (12) and
- a manipulator (5), which is arranged on the arm (15) and is swivel-mounted about a horizontal, second swivel axis (14) on the arm (15),
**characterized in that** the arm (15) is swivel-mounted about a horizontal, first swivel axis (13) on the vertical carriage (12)
- wherein the arm (15) is swivel-mounted about a vertical swivel axis (103; 104),
- wherein the first swivel axis (13) is parallel to the second swivel axis (14), and
- wherein the first swivel axis (13) is arranged at a first side of the vertical swivel axis (103; 104) in a first distance (A1) from the vertical swivel axis (103; 104).

2. The handling arrangement (1) according to claim 1, wherein the vertical swivel axis is a third swivel axis (103), the tower (3) being mounted to be swiveled thereabout, or wherein the vertical swivel axis is a fourth swivel axis (104), the arm on the vertical carriage (12) being mounted to be swiveled thereabout.

3. The handling arrangement (1) according to claim 1 or 2, wherein the second swivel axis (14) is arranged in a first end position on a second side of the vertical swivel axis (103; 104) opposite the first side with a second distance (A2).

4. The handling arrangement (1) according to claim 3, wherein the second swivel axis (14) is arranged in a second end position on the second side of the vertical swivel axis (103; 104) opposite the first side with a third distance (A3).

5. The handling arrangement (1) according to claim 3 or 4, wherein the vertical swivel axis (103; 104) intersects the arm (15) in the first and/or second end position.

6. The handling arrangement (1) according to one of the preceding claims, wherein the one-piece rigid arm (15) is swivel-mounted about the first swivel axis (13) at an angle (α) of ≥ 180°.

7. The handling arrangement (1) according to one of the preceding claims, wherein a forced coupling unit (8) is provided between the first swivel axis (13) and the second swivel axis (14), which is arranged to keep the manipulator (5) horizontally aligned in any swivel position of the arm (15).

8. The handling arrangement (1) according to claim 7, wherein the first swivel axis (13) is drivable by means of a drive and the second swivel axis (14) is without its own drive.

9. The handling arrangement (1) according to claim 2, wherein a central axis (22) of the tower (3) and the third swivel axis (103) diverge and are parallel to each other.

10. The handling arrangement (1) according to one of the preceding claims, wherein the tower (3) is arranged on a horizontal carriage (9), wherein the horizontal carriage (9) is movable on the horizontal rail arrangement (101) in the direction of the horizontal axis (21).

11. The handling arrangement according to claim 10, wherein a base plate (11) is rotatably arranged on the horizontal carriage (9), wherein the tower (3) is fixed on the base plate (11).

12. The handling arrangement (1) according to one of the preceding claims, wherein the arm (15) is attached to the vertical carriage (12) via a first and second vertical holding plate (61, 62) of a holder (6).

13. The handling arrangement (1) according to claim 7, wherein the forced coupling unit (8) comprises a chain drive or a belt drive.

14. The handling arrangement (1) according to one of the preceding claims, further comprising a shelf system (7), in which the workpieces (16) and/or tools are stored, and/or
in which a single handling arrangement is integrated in a cabinet (4) together with the shelf system (7).

15. A machine tool arrangement (100), comprising at least one machine tool (2) and a handling arrangement (1) according to one of the preceding claims.

## Revendications

1. Ensemble de manipulation (1) pour la manipulation d'outils et/ou de pièces à usiner (16) d'une machine-outil (2) comprenant
- un ensemble de rail horizontal (101),
- une tour verticale (3) qui est agencée de manière déplaçable sur l'ensemble de rail horizontal (101) en direction d'un axe horizontal (21),
- un ensemble de rail vertical (102) qui est agencé au niveau de la tour (3),
- un chariot vertical (12) qui est déplaçable sur l'ensemble de rail vertical (102) dans le sens vertical (B),
- précisément un bras rigide monobloc (15) qui est agencé au niveau du chariot vertical (12) et
- un manipulateur (5) qui est agencé au niveau du bras (15) et peut être pivoté autour d'un deuxième axe de pivotement horizontal (14) au niveau du bras (15),
- **caractérisé en ce que** le bras (15) peut être pivoté autour d'un premier axe de pivotement (13) horizontal au niveau du chariot vertical (12), dans lequel le bras (15) peut être pivoté autour d'un axe de pivotement vertical (103 ; 104),
- dans lequel le premier axe de pivotement (13) est parallèle au deuxième axe de pivotement (14) et
- dans lequel le premier axe de pivotement (13) est agencé au niveau d'un premier côté de l'axe de pivotement vertical (103 ; 104) à une première distance (A1) de l'axe de pivotement vertical (103 ; 104).

2. Ensemble de manipulation (1) selon la revendication 1, dans lequel l'axe de pivotement vertical est un troisième axe de pivotement (103), autour duquel la tour (3) peut être pivotée, ou
dans lequel l'axe de pivotement vertical est un quatrième axe de pivotement (104), autour duquel le bras peut être pivoté au niveau du chariot vertical (12).

3. Ensemble de manipulation (1) selon la revendication 1 ou 2, dans lequel le deuxième axe de pivotement (14) est agencé dans une première position d'extrémité au niveau d'un second côté de l'axe de pivotement vertical (103 ; 104) par rapport au premier côté à une deuxième distance (A2).

4. Ensemble de manipulation (1) selon la revendication 3, dans lequel le deuxième axe de pivotement (14) est agencé dans une seconde position d'extrémité au niveau du second côté de l'axe de pivotement vertical (103 ; 104) par rapport au premier côté à une troisième distance (A3).

5. Ensemble de manipulation (1) selon la revendication 3 ou 4, dans lequel l'axe de pivotement vertical (103 ; 104) coupe le bras (15) dans la première et/ou seconde position d'extrémité.

6. Ensemble de manipulation (1) selon l'une quelconque des revendications précédentes, dans lequel le bras rigide monobloc (15) peut être pivoté autour du premier axe de pivotement (13) dans un angle (α) ≥ à 180°.

7. Ensemble de manipulation (1) selon l'une quelconque des revendications précédentes, dans lequel une unité de couplage à force (8) est prévue entre le premier axe de pivotement (13) et le deuxième axe de pivotement (14), laquelle est conçue afin de maintenir orienté horizontalement le manipulateur (5) dans chaque position de pivotement du bras (15).

8. Ensemble de manipulation (1) selon la revendication 7, dans lequel le premier axe de pivotement (13) peut être entraîné au moyen d'un entraînement et le deuxième axe de pivotement (14) est sans entraînement propre.

9. Ensemble de manipulation (1) selon la revendication 2, dans lequel un axe médian (22) de la tour (3) et le troisième axe de pivotement (103) se séparent et sont parallèles l'un à l'autre.

10. Ensemble de manipulation (1) selon l'une quelconque des revendications précédentes, dans lequel la tour (3) est agencée sur un chariot horizontal (9), dans lequel le chariot horizontal (9) est déplaçable sur l'ensemble de rail horizontal (101) en direction de l'axe horizontal (21).

11. Ensemble de manipulation selon la revendication 10, dans lequel une plaque de base (11) est agencée de manière rotative sur le chariot horizontal (9), dans lequel la tour (3) est fixée sur la plaque de base (11).

12. Ensemble de manipulation (1) selon l'une quelconque des revendications précédentes, dans lequel le bras (15) est relié par le biais d'une première et d'une seconde plaque de retenue verticale (61, 62) d'un support (6) au chariot vertical (12).

13. Ensemble de manipulation (1) selon la revendication 7, dans lequel l'unité de couplage à force (8) présente une transmission par chaîne ou une transmission par courroie.

14. Ensemble de manipulation (1) selon l'une quelconque des revendications précédentes, comprenant de plus un système d'étagères (7) dans lequel les pièces à usiner (16) et/ou outils sont logé(e)s et/ou
dans lequel un seul ensemble de manipulation est intégré dans une armoire (4) conjointement avec le système d'étagères (7).

15. Ensemble de machine-outil (100) comprenant au moins une machine-outil (2) et un ensemble de manipulation (1) selon l'une quelconque des revendications précédentes.
